# EUROPÄISCHE PATENTSCHRIFT

(11) **EP 0 847 414 B1**
(45) Veröffentlichungstag und Bekanntmachung des Hinweises auf die Patenterteilung: **06.05.1999**
(21) Anmeldenummer: 96930141.5
(22) Anmeldetag: 30.08.1996
(51) Int. Cl.: C08G 69/16, C08G 69/46

(54) **VERFAHREN ZUR KONTINUIERLICHEN HERSTELLUNG EINES DIMERARMEN POLYAMID 6**
PROCESS FOR CONTINUOUSLY PREPARING A POLYAMIDE 6 WITH A LOW DIMER CONTENT
PROCEDE DE PRODUCTION CONTINUE D'UN POLYAMIDE 6 A FAIBLE TENEUR EN DIMERES

(30) Priorität: 30.08.1995 DE 19531989
(43) Veröffentlichungstag der Anmeldung: 17.06.1998
(73) Patentinhaber: POLYMER ENGINEERING GmbH, 07407 Rudolstadt (DE)
(72) Erfinder: WILTZER, Karlheinz, D-07422 Bad Blankenburg (DE); LAUSMANN, Peter, D-07407 Rudolstadt (DE); EBERT, Baldur, D-07422 Bad Blankenburg (DE)
(74) Vertreter: Feldkamp, Rainer, Dipl.-Ing.
(86) Internationale Anmeldenummer: EP9603823
(87) Internationale Veröffentlichungsnummer: WO9708223

(56) Entgegenhaltungen:
- EP-A- 0 000 397
- EP-A- 0 005 466
- EP-A- 0 123 881
- DE-A- 2 501 348
- DE-A- 2 948 865
- DE-A- 4 324 616

## Beschreibung

Die Erfindung betrifft ein mehrstufiges Verfahren zur kontinuierlichen Herstellung eines dimerarmen Polyamid 6 aus E-Caprolactam und/oder aus sogenannten Rücklactamen, die in Extraktions- und Schmelzeentmonomerisierungsstufen zur Verringerung des niedermolekularen Anteils bei Polyamid 6 anfallen.

Es ist bekannt, daß sich während der Polykondensation von ε-Caprolactam zu Polyamid 6 ein chemisches Gleichgewicht einstellt, welches temperaturabhängig ist. Bei einer betrieblich üblichen Reaktionstemperatur von 280°C stellt sich ein wasserlöslicher Anteil von ca. 13 % ein.

Für die Weiterverarbeitung des Polymeren ist es notwendig, den nicht umgesetzten Anteil herauszulösen. Hierfür sind verschiedene Verfahren bekannt. So werden z.B. aus der im Gleichgewichtszustand befindlichen Schmelze Granulate hergestellt, die mit Wasser extrahiert werden. Dabei werden ε-Caprolactam, Oligomere und Dimere herausgelöst. Bei diesem Verfahren ist eine anschließende Trocknung des Granulates und eine Aufarbeitung der wäßrigen Extraktionswässer durch Eindampfung notwendig.

Weiterhin sind Verfahren bekannt, bei denen aus Schmelzfilmen mittels Vakuum oder Inertgas nicht umgesetztes ε-Caprolactam, Dimere und Oligomere ausgetrieben werden.

Aus ökonomischen Gründen sollen diese wiedergewonnenen Produkte dem Polymerisationsprozeß erneut zugeführt werden.

Es gibt Verfahren, in denen PA-6-Extraktwässer-Konzentrate mit hohen oder geringen Feststoffgehalten in kleineren oder größeren Anteilen dem Frischlactam zugesetzt werden, um sie mit zu Polyamid 6 umzusetzen. Nach den DE-AS 25 01 348 und DE-OS 27 32 328 werden auf mehr als 90% bzw. auf 60-70% Feststoffgehalt konzentrierte Polyamid-6-Extraktwässer mit mehr als der gleichen Menge Frischlactam, bezogen auf den Feststoffgehalt, mit Propion- bzw. Benzoesäure in einem im wesentlichen bei Normaldruck betriebenen Reaktor polymerisiert.

Nachteil dieses Verfahrens ist, daß bei Polymerisation von Polyamid-6-Extraktwässer-Konzentraten mit Monocarbonsäuren längere Polymerisationszeiten als bei Polymerisaten von Frischlactam mit Monocarbonsäuren erforderlich sind. Außerdem erreicht man nur solche Umsätze an ε-Caprolactam bzw. zyklischen Oligomeren, die ca. 2 bis 3 % unter denen von Frischlactam-Polymerisaten liegen, da die zyklischen Oligomeren am Reaktionsmechanismus im wesentlichen nicht teilnehmen. Der hohe Wassergehalt im Reaktionsgemisch führt in Verbindung mit der drucklosen Fahrweise des Polymerisationsreaktors zu einem ungünstigen Reaktionsablauf. Das Wasser kann reaktionstechnisch nicht wirken, da es verdampft.

Bekannt ist weiterhin, daß Schmelze-Vakuum-Entmonomerisierungsverfahren so betrieben werden, daß die gasförmig abgezogenen Entmonomerisierungsprodukte, d.h. ε-Caprolactam und zyklische Oligomere, in Frischlactam kondensiert und so der Polymerisation mit unterworfen werden (DE-OS 28 21 686 und DE-OS 29 48 865). Auch bei ähnlichen Verfahren werden die zyklischen Oligomere, insbesondere die zyklischen Dimere nicht zu reaktionsfähigen Verbindungen umgewandelt.

Auch ist die starke katalytische Wirkung der o-Phosphorsäure auf die ε-Caprolactam-Polymerisation [Geleji, F. u.a. 'Wirkungsmechanismus verschiedener Katalysatoren bei der Caprolactampolymerisation' in Faserforschung und Textiltechnik 13 (1962)6, 282-283] hinsichtlich der Polymerisation zyklischer Oligomeren (Schade, H. und Beckhaus, F.W.: Verfahren zum Polymerisieren von Oligomeren des ε-Caprolactams - DD-PS 24 307) bekannt. Als Nachteile einer solchen Polymerisationstechnologie treten unter anderem auf:
- zu schneller Anstieg der Viskosität und damit ungenügende Reproduzierbarkeit des erwünschten Polymerisationsgrades, weil die o-Phosphorsäure im wesentlichen als Katalysator und weniger als Kettenregler wirkt
- zu geringe Umsätze an ε-Caprolactam und zyklischen Oligomeren sowie
- Depolymerisationsvorgänge beim Verarbeiten eines solchen Polyamid-6-Granulates.

Um diesen vorgenannten Problemen aus dem Wege zu gehen, trennt man üblicherweise bei der Aufarbeitung der wäßrigen Extraktionswässer durch Destillation die Oligomeren ab. Die abgetrennten Oligomere werden unter Belastung der Umwelt deponiert oder durch Aufarbeitung mit Phosphorsäure energieintensiv zu Lactam depolymerisiert und das Lactam anschließend einer Reinigungsstufe zugeführt. Die Rückstände werden deponiert.

Polyamidhersteller haben bisher aus apparatetechnischen und wirtschaftlichen Gründen das Lactam-Oligomeren-Gemisch bis auf einen Restwassergehalt von ≤ 2 % durch Eindampfung aufkonzentriert. Bei diesem Wassergehalt wird es nicht möglich, das zyklische Dimere in den Polymerverband chemisch einzubinden.

Das Ziel der Erfindung besteht darin, bei der Herstellung von Polyamid 6 aus Frischlactam die Entstehung von Dimeren und Oligomeren weitestgehend einzuschränken und vor allem über Rücklactam eingebrachte zyklische Dimere, auch zyklische Oligomere in den Herstellungsprozeß einzubinden und die Verarbeitung der Gesamtmenge unter Schaffung eines geschlossenen Stoffkreislaufes (ohne Abfall) zu hochwertigen Endprodukten zu erreichen.

Der Erfindung liegt die Aufgabe zugrunde, das zyklische Dimere während der Polymerisation an seiner Entstehung zu hindern und gleichzeitig vorhandene zyklische Dimere des Lactam-Oligomeren-Gemisches aus Rücklactam auf einfache Weise in eine reaktionsfähige Verbindung zu überführen und am Herstellungsprozeß teilnehmen zu lassen.

Diese Aufgabe wird durch die im Patentanspruch 1 angegebenen Merkmale gelöst. Vorteilhafte Ausgestaltungen und Weiterbildungen der Erfindung ergeben sich aus den Unteransprüchen.

Erfindungsgemäß wird Frischlactam und/oder Rücklactam in ein vorzugsweise geschlossenes System eingebracht und unter Druck durch Hydrolyse bei Wassergehalten von 3% bis 15% und Temperaturen im Bereich von 220 bis 280° C in der schmelzflüssigen Phase behandelt. Eine solche Behandlung von Frischlactam und/oder Rücklactam in einer Druckstufe wird vor dem Durchlaufen von Reaktionsstufen einer Polymerisationsanlage vorgenommen.

Im Falle der Herstellung von Polyamid 6 aus Frischlactam wird in einer ersten Druckstufe die Hydrolyse des ε-Caprolactams in einem geschlossenen System, welches vorzugsweise nur Eintritts- und Austrittsrohr aufweist, bei Wassergehalten im Bereich von 3-10 % in der schmelzeflüssigen Phase bei Temperaturen zwischen 220 und 280°C vorgenommen.

Bei der Herstellung von Polyamid 6 aus Frischlactam oder Rücklactam allein werden im Reaktionsgemisch vorzugsweise noch vor dem Eintritt in die erste Druckstufe die Oligomere im Lactam gelöst. In Abhängigkeit von der Ausgangskonzentration der Oligomeren in der Lösung wird dabei eine Lösungstemperatur der Oligomere im Lactam zwischen 120 und 180°C eingestellt.

In der ersten Druckstufe (Dimerenbehandler) wird die Hydrolyse von Frischlactam und Rücklactam oder Rücklactam allein in der schmelzeflüssigen Phase bei einer Temperatur im Bereich von 220 bis 280°C vorgenommen. Der Wassergehalt wird bei der Hydrolyse der zyklischen Oligomere, insbesondere zyklischer Dimere im Reaktionsgemisch in dieser Druckstufe, entsprechend dem Wassergehalt des Rücklactams bei 6 bis 15% gehalten.

Unter der aufgeführten Einstellung von Wasserkonzentration und Reaktionstemperatur wird die dimere Ringverbindung aufgespalten. Dabei erhält man aus dem zyklischen Dimeren Aminocapronsäure und lineare Dimere, welche ein problemloses Einfügen in eine Polymerkette ermöglichen.

Überraschenderweise wurde gefunden, daß etwa 3 % Wasser im Lactam-Oligomeren-Gemisch enthalten sein müssen, um das zyklische Dimere zu spalten, wobei der Wasseranteil unter erhöhtem Druck in einem geschlossenen System günstig und voll wirksam zur Reaktion beiträgt. Mit einer solchen Lösung ist es möglich, Frischlactam und Rücklactam sowie Rücklactam problemlos auch allein einzusetzen.

Der Wassergehalt in der Polyamid-6-Schmelze wird nachfolgend in einer weiteren Druckstufe mit Gasraum (Polymerisator) durch Abführen des überschüssigen Wassers in Abhängigkeit vom gewünschten konstanten Endpolymerisationsgrad, bei 0,3 und 1,9 % eingestellt. Dazu wird der Druck im Gasraum dieses Polymerisators geregelt, vorzugsweise durch Regeln des Wassergehaltes und/oder der Temperatur.

Die Erfindung soll an Ausführungsbeispielen erläutert werden:

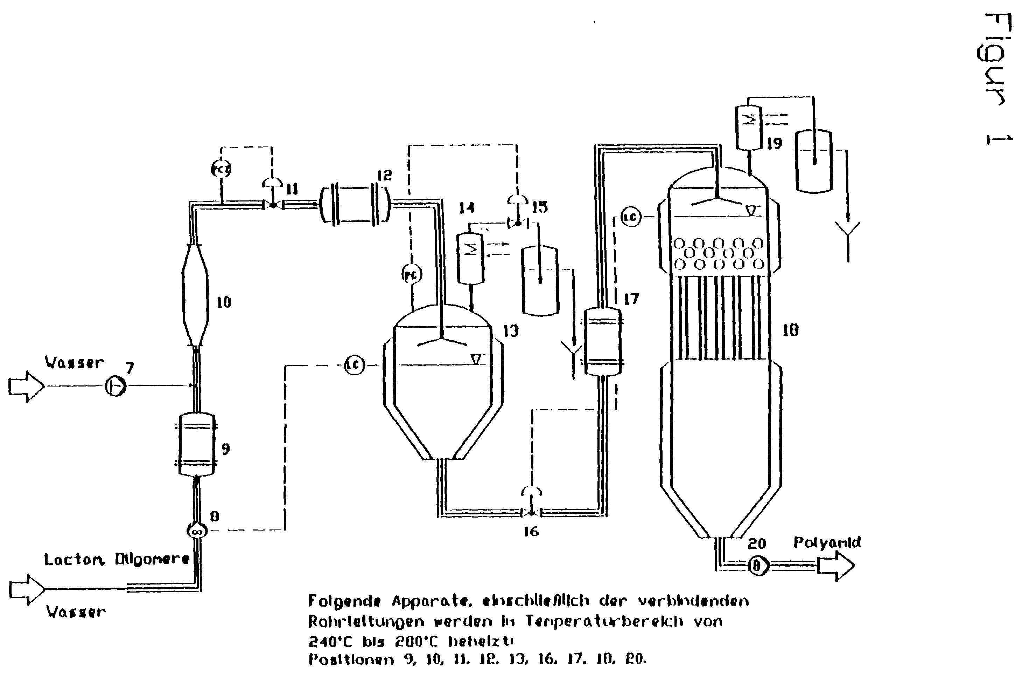

In Fig. 1 wird schematisch die Behandlung der zyklischen Dimeren und die Weiterführung der Polymerisationsreaktion dargestellt.

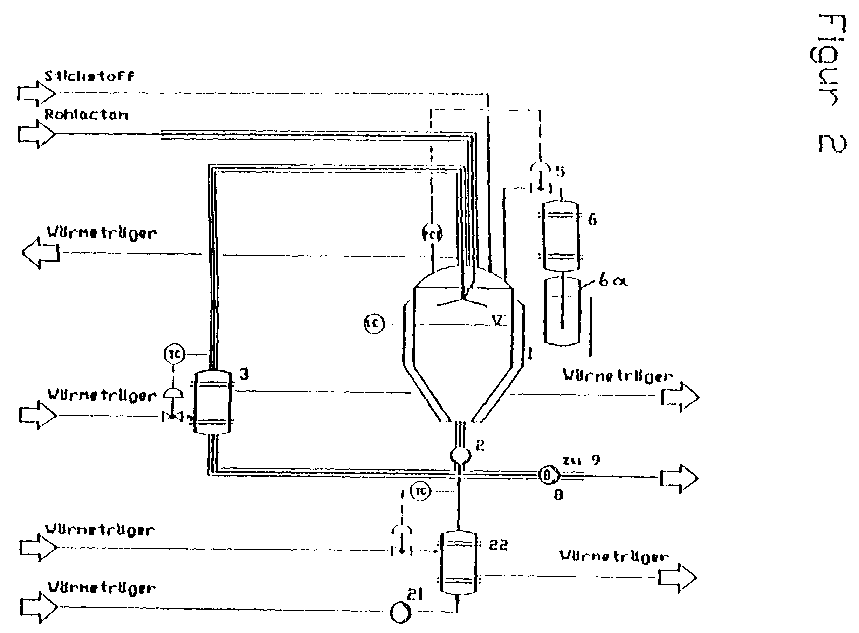

Nach dem in Fig. 2 dargestellten Ablauf werden in Rücklactam enthaltene, nicht gelöste Dimere und Oligomeren im Lactam gelöst.

### Ausführungsbeispiel 1

Im Ausführungsbeispiel wird ein Verfahren beschrieben, bei dem Rücklactam nach Fig. 2 und dann nach Fig. 1 behandelt wird.

Für die Herstellung von Polyamid 6 aus Rücklactam werden Extraktionswässer auf einen mittleren Feststoffgehalt von 93 % (lang-periodische Schwankungsbreite 91 bis 95 %) aufkonzentriert. Dieses sogenannte Rücklactam besteht aus monomerem Lactam, Dimeren, Oligomeren und Wasser. Beim Einlauf in den Rücklactambehälter 1 sind Dimere und Oligomere nicht ausreichend gelöst.

Mittels der beheizten Pumpe 2 wird das Rücklactam über den Wärmetauscher 3 auf 150°C erwärmt. Bei der sich einstellenden Mischtemperatur im Rücklactambehälter 1 sind alle Dimeren und Oligomeren gelöst. Zur Einstellung eines Wassergehaltes > 3 %, im Beispiel zwischen 5 und 9 %, wird das druckbegrenzte Regelventil 5 genutzt. Eventuell verdampfendes Wasser wird im Kondensator 6 kondensiert und über die Abtauchung 6a abgeführt. Wasser kann verdampfen, wenn der Wasseranteil im Rohlactam > 9 % beträgt. Mittels der Dosierpumpe 8 wird das Rücklactam über den Wärmeträger 9 in den Dimerenbehandler 10 gedrückt. Dieses und der folgende Ablauf ist in Fig. 1 dargestellt.

Im Wärmetauscher 9 wird das Rücklactam auf mindestens 220°C aufgewärmt. Der Dimerenbehandler 10 ist ein Doppelmantel-Druckapparat, der mit Produckt - ohne Gasphase - gefüllt ist und über den Doppelmantel mittels Wärmeträger aktiv isoliert ist.

Unter diesen Bedingungen erhält man nach dem Dimerenbehandler 10 eine Polyamidschmelze mit einer relativen Lösungsviskosität von 1,25 bis 1,35 (Lösungsviskosität bezogen auf Polymer-Schwefelsäurelösung mit 1 g Polyamid in 100 ml 96%-iger Säure im Vergleich zu 96%-iger Schwefelsäure).

Um ein Polymerisat mit konstanten und höheren Viskositäten herstellen zu können, muß das im Überschuß vorhandene physikalisch gelöste Wasser der Schmelze in einem Polymerisator 13 bis auf einen von der gewünschten Endviskosität abhängigen notwendigen Wassergehalt ausgetrieben werden.

Über das Ventil 11 wird gesichert, daß der Druck oberhalb des Produktsiedepunktes im Dimerenbehandler 10 eingestellt bleibt. Über den Verdampfer 12 gelangt das Produkt in den Polymerisator 13, der unter Druck bei einer Wasserkonzentration von 1,7 % betrieben wird. Das verdampfte Wasser verläßt über die Rückflußkolonne 14 das System, von wo das im aufsteigenden Dampf enthaltene Lactam wieder in den Polymerisator 13 zurückläuft, und das Ventil 15 regelt den Druck des Verfahrens.

Nach dem Polymerisator 13 gelangt das Polyamid über Ventil 16 und Verdampfer 17 in den Polyamidnachkondensator 18. Im unteren Teil dieses Nachkondensators 18 wird die PA-Schmelze auf 240°C abgekühlt.

Über die Dosierpumpe 20 verläßt das Polyamid das Verfahren mit der Lösungsviskosität von 2,5 und einem in Wasser extrahierten Anteil von 9,9 %.

### Ausführungsbeispiel 2

Es wird in einer Polymerisationsanlage für die Herstellung von Polyamid 6 ein Lactam-Oligomeren-Gemisch eingesetzt, das aus Entmonomerisierungsstufen stammt und demzufolge nahezu kein Wasser enthält.

Um ein Ausfallen der Oligomeren zu vermeiden, wird dieses Gemisch mittels Wärmetauscher 3 auf 150°C erwärmt, wodurch die Dimeren und Oligomeren in Lösung gehen. Diese Lösung läßt sich unproblematisch über größere Entfernungen transportieren, ohne daß es zu einem Verschluß der Rohrleitungen durch ausgefallene Oligomere kommt.

Die Lactam-Dimeren-Oligomerenlösung wird wie im Ausführungsbeispiel 1 im Wärmetauscher 9 erwärmt, jedoch hier auf minimal 240°C, und anschließend in die erfindungsgemäße Druckstufe, den Dimerenbehandler 10, eingebracht und behandelt. Zwischen Wärmetauscher 9 und Dimerenbehandler 10 wird Wasser über das Ventil 7 eingespeist und die Schmelze auf einen Wassergehalt von 6 % physikalisch gelöstes Wasser eingestellt. Die zyklischen Oligomere, insbesondere Dimere werden in der Druckstufe durch Hydrolyse reaktionsfähig gespalten.

Der weitere Polysmerisationsablauf erfolgt analog wie im Ausführungsbeispiel 1 beschrieben. Man erhält ein Polymerisat mit einer Lösungsviskosität von 2,52 und einem Gesamtextrakt von 9,9%.

### Ausführungsbeispiel 3

In einer Polymerisationsanlage wird Polyamid 6 aus Rücklactam und Frischlactam hergestellt.

Dazu setzt man dem Lactam-Oligomeren-Gemisch, gewonnen aus Entmonomerisierungsstufen, die etwa gleiche Menge an Frischlactam zu. Bei diesem Mischungsverhältnis lösen sich die Oligomeren bereits bei ca. 120°C im Lactam. Die Aufwärmung und die weitere Behandlung der polymeren Schmelze wird analog wie im Ausführungsbeispiel 1 beschrieben vorgenommen. Die Wasserzuführung bis auf einen Wassergehalt von 6 % erfolgt wie im Ausführungsbeispiel 2 dargestellt. Man erhält ein Polymerisat mit einer Lösungsviskosität von 2,61 und einem Gesamtextrakt von 9,7 %.

### Ausführungsbeispiel 4

Für die Herstellung von Polyamid 6 aus Frischlactam wird Frischlactam wie im Ausführungsbeispiel 1 und in Fig. 1 dargestellt in einem Wärmetauscher 9 auf 240°C erwärmt und anschließend in die erfindungsgemäße Druckstufe, den Dimerenbehandler 10, eingespeist. Zwischen Wärmetauscher 9 und Dimerenbehandler 10 wird durch Zugabe von Wasser der Wassergehalt des Frischlactams bei 3 % eingestellt. Eine Bildung zyklischer Oligomere und Dimere wird damit wirksam unterdrückt.

Der weitere Polymerisationsablauf erfolgt analog wie im Ausführungsbeispiel 1 beschrieben. Man erhält ein Polymerisat mit einer Lösungsviskosität von 2,70 und einem Gesamtextrakt von 9,6 %.

In nachstehender Tabelle wird die Zusammensetzung des Gesamtextraktes der nach den Ausführungsbeispielen 1-4 erfindungsgemäß hergestellten Polymerisate verglichen mit Polymerisaten, die nach üblichen Verfahren, die aus dem Stand der Technik bekannt sind, hergestellt wurden.

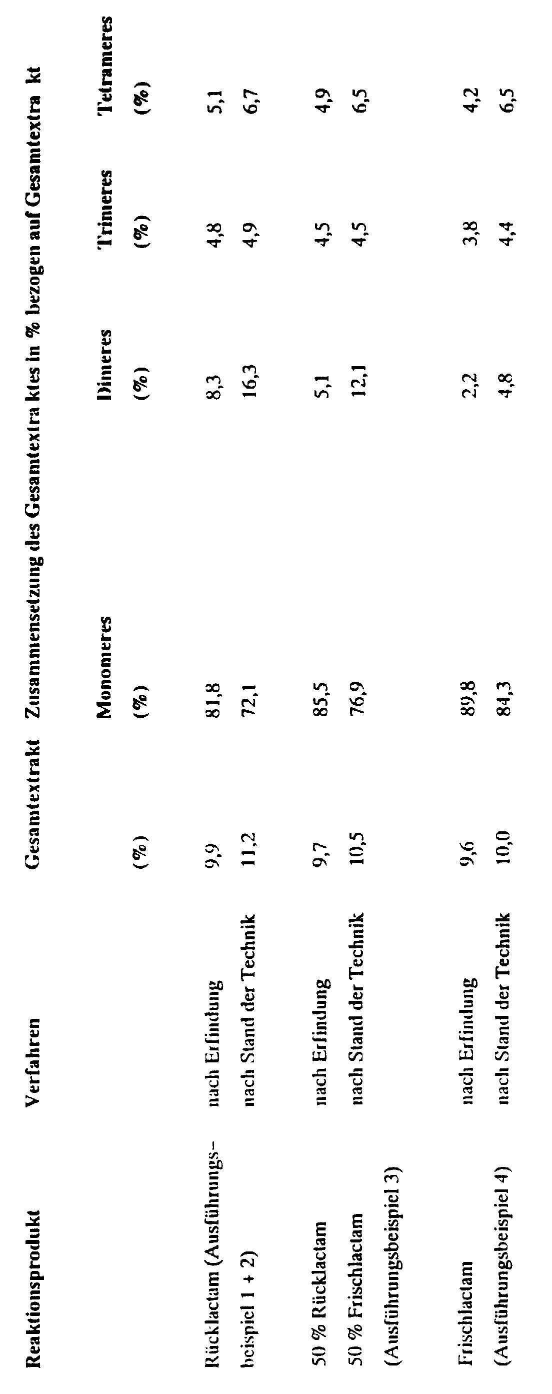

## Patentansprüche

1. Verfahren zur kontinuierlichen Herstellung von dimerarmen Polyamid 6 aus ε-Caprolactam (Frischlactam) und/oder aus sogenannten Rücklactamen aus Extraktions- und Schmelzeentmonomerisierungsstufen, in mehreren Verfahrensstufen,
dadurch gekennzeichnet, daß Rücklactam und/oder Frischlactam in der ersten Druckstufe (Dimerenbehandler) durch Hydrolyse bei Wassergehalten von 3 bis 15 % und Temperaturen im Bereich von 220°C bis 280°C in der schmelzeflüssigen Phase behandelt, und die Polyamid-Schmelze nachfolgend in der zweiten Druckstufe unter Einstellung eines niedrigeren konstanten Wassergehaltes in einer Druckstufe mit Gasraum (Polymerisator) dem weiteren Polymerisationsprozeß zugeführt wird.

2. Verfahren nach Anspruch 1,
dadurch gekennzeichnet, daß Rücklactam und/oder Frischlactam in ein geschlossenes System eingebracht wird.

3. Verfahren nach Anspruch 1 und 2,
dadurch gekennzeichnet, daß eine Schmelze aus Frischlactam und/oder aus Rücklactam in Anwesenheit von Wasser der ersten Druckstufe (Dimerenbehandler) vor dem Durchlaufen von Reaktionsstufen einer Polymerisationsanlage zugeführt wird.

4. Verfahren nach Anspruch 1 bis 3,
dadurch gekennzeichnet, daß der Wassergehalt bei Einsatz nur von Frischlactam im Dimerenbehandler im Bereich von 3-10 %, vorzugsweise 3,1-4,5 % eingestellt wird.

5. Verfahren nach Anspruch 1 bis 3,
dadurch gekennzeichnet, daß in der Schmelze aus Frischlactam und Rücklactam oder Rücklactam allein vor dem Eintritt des Polymerisationsgemisches in die erste Druckstufe die Oligomere im Lactam gelöst werden und die Lösungstemperatur der Oligomere im Lactam in Abhängigkeit von der Konzentration der Dimeren in der Lösung zwischen 120°C und 180°C eingestellt wird.

6. Verfahren nach Anspruch 1, 2, 3 und 5,
dadurch gekennzeichnet, daß der Wassergehalt bei der Hydrolyse der zyklischen Oligomere, insbesondere der zyklischen Dimere, in der Schmelze aus Frischlactam und Rücklactam oder Rücklactam allein in der ersten Druckstufe, entsprechend dem vorhandenen Wassergehalt des Rücklactams, bei 6 bis 15 % gehalten wird.

7. Verfahren nach Anspruch 1 bis 6,
dadurch gekennzeichnet, daß der Wassergehalt in der polymeren Schmelze in der weiteren Druckstufe mit Gasraum (Polymerisator) durch Abführen des überschüssigen Wassers in Abhängigkeit vom gewünschten Endpolymerisationsgrad bei 0,3-1,9% eingestellt wird.

## Claims

1. A process for the continuous production in a plurality of stages of a polyamide-6 with a low dimer content from ε-caprolactam (fresh lactam) and/or from so-called recycled lactams from extraction and melt-demonomerising stages, characterised in that recycled lactam and/or fresh lactam is processed in the molten state in the first pressure stage (dimer processor) by hydrolysis with water contents of from 3 % to 15 % and temperatures ranging from 220 to 280 °C, and the polyamide melt is subsequently fed, in the second pressure stage, to the remaining polymerisation process with adjustment of the water content to a relatively low, constant level in a pressure stage with gas chamber (polymeriser).

2. A process according to claim 1, characterised in that recycled lactam and/or fresh lactam is introduced into a closed system.

3. A process according to claim 1 and claim 2, characterised in that a melt of fresh lactam and/or recycled lactam is fed in the presence of water to the first pressure stage (dimer processor) prior to passage through the reaction stages of a polymerisation plant.

4. A process according to claims 1 to 3, characterised in that, when only fresh lactam is used, the water content is adjusted in the dimer processor to the range of from 3-10 %, preferably 3.1-4.5 %.

5. A process according to claim 1 to claim 3, characterised in that, in the melt consisting of fresh lactam and recycled lactam or recycled lactam alone, the oligomers are dissolved in the lactam prior to entry of the polymerisation mixture into the first pressure stage and the solution temperature of the oligomers in the lactam is adjusted to between 120°C and 180°C as a function of the concentration of dimers in the solution.

6. A process according to claims 1, 2 3 and 5, characterised in that, during hydrolysis of the cyclic oligomers, in particular the cyclic dimers, the water content in the melt consisting of fresh lactam and recycled lactam or recycled lactam alone is held at from 6 to 15 % in the first pressuze stage, in accordance with the water content present in the recycled lactam.

7. A process according to claims 1 to 6, characterised in that the water content in the polymer melt is adjusted in the subsequent pressure stage with gas chamber (polymeriser) by the draining-off of excess water to from 0.3-1.9 % as a function of the desired final polymerisation level.

## Revendications

1. Procédé de production continue de polyamide 6 à faible teneur en dimères à partir d'e-caprolactame (lactame frais) et/ou à partir de lactames appelés lactames recyclés provenant d'étapes de démonomérisation par extraction et à l'état fondu, en plusieurs étapes de procédé, caractérisé en ce que le lactame recyclé et/ou le lactame frais est traité dans la première étape sous pression (dispositif de traitement de dimères) par hydrolyse à des teneurs en eau de 3 à 15% et des températures dans le domaine de 220 à 280°C dans la phase liquide fondue et la masse fondue de polyamide est ensuite envoyée à la suite du procédé de polymérisation dans la deuxième étape sous pression avec réglage d'une plus faible teneur en eau constante dans une étape sous pression avec compartiment de gaz (polymérisateur).

2. Procédé selon la revendication 1 caractérisé en ce que le lactame recyclé et/ou le lactame frais est introduit dans un système fermé.

3. Procédé selon les revendications 1 et 2 caractérisé en ce qu'une masse fondue de lactame frais et/ou de lactame recyclé est envoyée en présence d'eau à la première étape sous pression (dispositif de traitement des dimères) avant le franchissement des étapes réactionnelles d'une installation de polymérisation.

4. Procédé selon les revendications 1 à 3 caractérisé en ce que, dans le cas de l'utilisation de lactame frais seulement, la teneur en eau est ajustée dans le domaine de 3 - 10%, de préférence de 3,1 - 4,5%, dans le dispositif de traitement des dimères.

5. Procédé selon les revendications 1 à 3 caractérisé en ce que, dans la masse fondue de lactame frais et de lactame recyclé ou de lactame recyclé seul, avant l'entrée du mélange de polymérisation dans la première étape sous pression, les oligomères sont dissous dans le lactame et la température de solution des oligomères dans le lactame est ajustée entre 120°C et 180°C selon la concentration des dimères dans la solution.

6. Procédé selon les revendications 1, 2, 3 et 5 caractérisé en ce que la teneur en eau lors de l'hydrolyse des oligomères cycliques, en particulier des dimères cycliques, dans la masse fondue de lactame frais et de lactame recyclé ou de lactame recyclé seul dans la première étape sous pression est ajustée entre 6 et 15% selon la teneur en eau du lactame recyclé qui est présente.

7. Procédé selon les revendications 1 à 6 caractérisé en ce que la teneur en eau dans la masse fondue polymère dans l'autre étape sous pression avec compartiment de gaz (polymérisateur) est ajustée à 0,3 - 1,9% par élimination de l'eau en excès selon le degré de polymérisation final voulu.
